# EUROPÄISCHE PATENTSCHRIFT

(11) **EP 1 152 506 B1**
(45) Veröffentlichungstag und Bekanntmachung des Hinweises auf die Patenterteilung: **01.10.2003**
(21) Anmeldenummer: 01109661.7
(22) Anmeldetag: 19.04.2001
(51) Int. Cl.: H02B 1/01

(54) **Rahmengestell**
Frame
Bâti

(30) Priorität: 04.05.2000 DE 10021718
(43) Veröffentlichungstag der Anmeldung: 07.11.2001
(73) Patentinhaber: Knürr AG, 94424 Arnstorf (DE)
(72) Erfinder: Knab, Josef, 94439 Rossbach (DE); Prinz, Alexander, 84389 Postmünster (DE); Schneiderbauer, Siegfried, 94439 Rossbach (DE); Neuwardt, Klaus, 94436 Simbach (DE)
(74) Vertreter: Heim, Hans-Karl, Dipl.-Ing.

(56) Entgegenhaltungen:
- DE-U- 29 712 998
- GB-A- 895 462
- US-A- 3 353 854

## Beschreibung

Die Erfindung betrifft ein Rahmengestell, insbesondere für Geräteschränke, gemäß dem Oberbegriff des Anspruchs 1 (Siehe GB-A-895 462).

Die Erfindung ist für Schränke, Gehäuse und Behälter, bevorzugt für Schränke, welche zur Aufnahme von elektrischen und elektronischen Geräten und Bauteilen dienen, beispielsweise für LAN-Schränke, Rechner- und Serverschränke, geeignet. Die Erfindung kann auch für Arbeitstische und insbesondere Werkstatttische, bei denen drei Holme oder Profile rechtwinklig zueinander angeordnet und mit Hilfe eines Eckverbinders verbunden werden, eingesetzt werden.

Aus dem DE 93 02 769 U1 ist ein Geräteschrank bekannt, welcher Führungselemente zum Aufstecken sowie Durchgangsbohrungen zum Befestigen des jeweiligen Vertikalholms, Horizontalholms oder Tiefenholms mit Hilfe von Befestigungselementen aufweist. Die Führungselemente sind an stirnseitigen Anschlussflächen des Eckverbinders ausgebildet und wirken mit einer komplementären stirnseitigen Öffnung der Holme zusammen. Die Befestigung der aufgesteckten Holme wird anschließend mit drei in Durchgangsbohrungen des Eckverbinders geführten Befestigungselementen vorgenommen, welche jeweils in entsprechend auszubildende Befestigungsöffnungen der Holme eingeführt und gesichert werden.

Ein in der DE 195 29 270 C1 beschriebenes Rahmengestell für Geräteschränke weist ebenfalls Eckverbinder mit drei Ansätzen auf. Die Ansätze haben den gleichen quadratischen oder kreisförmigen Querschnitt wie die aufsteckbaren Profile. Jeder Ansatz weist zur dauerhaften, ohne Zerstörung nicht mehr lösbaren elektrischen Verbindung und mechanischen Befestigung eines aufgeschobenen Hohlprofils wenigstens eine Vertiefung auf, in welche Material des Hohlprofils, beispielsweise einer ausgestanzten Zunge, manuell oder mit Hilfe eines Werkzeugs eingedrückt werden muss.

Aus der DE 691 01 727 T2 ist ein Rahmengestell mit Quer-, Tiefen- und Vertikalprofilen bekannt, welche über Eckverbinder mit drei Steckansätzen lösbar verbunden werden. Die Profile und Steckansätze weisen einen dreieckigen Querschnitt auf. Die lösbare Befestigung erfolgt durch Verklemmen der auf die Steckansätze aufgeschobenen Profile und ein nachfolgendes Verschrauben. Zum Verklemmen der aufgeschobenen Profile ist jeder Steckansatz mit einem Querschlitz versehen, dessen Breite durch eine abstützbare Schraube entsprechend vergrößert werden kann.

Bei den bekannten Rahmengestellen wird jedes Profil einzeln mit dem zugehörigen Steckansatz des Eckverbinders verbunden, wobei wenigsten ein Befestigungselement benötigt und ein entsprechender Befestigungsvorgang, welcher manuell oder mit Hilfe eines Werkzeugs durchgeführt wird, erforderlich ist.

Der Erfindung liegt die **Aufgabe** zugrunde, ein stabiles Rahmengestell für Geräteschränke zu schaffen, welches bei einer besonders einfachen konstruktiven Ausbildung eine kostengünstige Fertigung und außerordentlich effiziente Montage ermöglicht.

Erfindungsgemäß wird die Aufgabe durch die Merkmale des Anspruchs 1 gelöst. Zweckmäßige und vorteilhafte Ausgestaltungen sind Merkmale der Unteransprüche und in der Figurenbeschreibung enthalten.

Ein Grundgedanke der Erfindung kann darin gesehen werden, dass die auf einen Eckverbinder mit drei Steckansätzen aufsteckbaren Profile, d.h. ein Querprofil, Tiefenprofil und Vertikalprofil, mit Hilfe eines einzigen Befestigungsmittels in nur einem Verbindungsvorgang gleichzeitig befestigt werden.

Erfindungsgemäß ist als Befestigungsmittel ein Klemmstück vorgesehen, welches als ein Innenteil der Eckverbindung angeordnet wird und mit jeweils wenigstens zwei Klemmschenkeln eine Fixierung eines aufgesteckten Profils ermöglicht.

Es ist besonders vorteilhaft, dass das Klemmstück rechtwinklig zueinander angeordnete Klemmschenkel aufweist, welche durch ihre vertikale und horizontale Anordnung in Befestigungsstellung jeweils zwei Seitenflächen der aufgesteckten Profile, d.h. des Querprofils, Tiefenprofils und Vertikalprofils, umfassen und in einer Klemmhalterung sicher an dem Eckverbinder halten.

Als Verbindungselement kann bevorzugt eine Befestigungsschraube eingesetzt werden. Diese Befestigungsschraube wird durch eine Bohrung, welche zweckmäßigerweise zentral und im Schnittpunkt der insgesamt sechs Klemmschenkel des Klemmstücks ausgebildet ist, geführt und in einer in Befestigungsstellung fluchtenden Bohrung des Eckverbinders gesichert.

Zweckmäßigerweise ist die Bohrung im Eckverbinder in einem Eckteil ausgebildet und mit einem Gewinde versehen. Das Eckteil ist im Schnittpunkt der in Richtung der räumlichen rechtwinkligen Koordinaten x, y und z angeordneten Steckansätze des Eckverbinders ausgebildet. Die Gewindebohrung in dem Eckteil des Eckverbinders und die in Befestigungsstellung fluchtende zentrale Bohrung im Klemmstück sind etwa diagonal ausgerichtet.

Das Klemmstück, insbesondere die Klemmschenkel, sind komplementär zu den Steckansätzen des Eckverbinders und den aufgeschobenen Profilen ausgebildet und reichen über wenigstens zwei aneinandergrenzende, rechtwinklig zueinander angeordnete Seitenflächen der Profile bzw. Steckansätze. Die Profile und Steckansätze können rechteckig oder quadratisch ausgebildet sein. Es ist fertigungstechnisch vorteilhaft, die Querprofile, Tiefenprofile und Vertikalprofile aus einem Hohlprofil, beispielsweise durch Ablängen, herzustellen.

In einer besonders vorteilhaften Ausgestaltung weist das Hohlprofil einen dreieckigen Querschnitt auf, wobei zwei gleich lange Seitenflächen einen rechten Winkel bilden und in Befestigungsstellung zu einem vom Rahmengestell gebildeten Innenraum gerichtet sind. Die Steckansätze der Eckverbinder sind komplementär mit entsprechend ausgerichteten Seitenflächen versehen und das Klemmstück weist für eine Klemmhalterung komplementär ausgebildete und ausgerichtete Klemmschenkel auf.

Es ist vorteilhaft, dass durch die Verwendung eines Klemmstücks grundsätzlich eine lösbare und unlösbare Fixierung der aufgesteckten Steckansätze möglich ist. Eine lösbare Verbindung wird erreicht, wenn die Profile auf die Steckansätze mit geringstmöglichem Spiel aufgesteckt werden und danach mit Hilfe des Klemmstücks und der zentralen Schraube am Eckverbinder befestigt werden.

Eine unlösbare Befestigung wird durch zusätzliche Rast- und/oder Eingriffselemente an den Steckansätzen oder Ausformungen an den Klemmschenkeln des Klemmstücks bzw. komplementären Ausnehmungen erreicht. Indem das Klemmstück mit Hilfe des Verbindungselementes mit seinen Klemmschenkeln und Ausformungen an den aufgeschobenen Profilen anliegt und festgeschraubt wird, kommt es zu einem Reib- und Formschluss, bei dem die Ausformungen Materialbereiche der Profile in die Ausnehmungen der Steckansätze pressen.

In einer Befestigungsvariante können die Steckansätze des Eckverbinders mit Eingriffselementen, beispielsweise keilähnlichen Nasen, versehen sein. Komplementäre Öffnungen in den Quer-, Tiefen- und Vertikalprofilen sichern ein Einrasten der Eingriffselemente in aufgeschobener Stellung und nach Fixierung des Klemmstücks eine besonders sichere Eckverbindung.

Eine weitere Befestigungsmöglichkeit der aufgeschobenen Profile kann darin bestehen, die Steckansätze mit wenigstens einer Bohrung, welche beispielsweise horizontal angeordnet ist, zu versehen und in den endseitigen Befestigungsbereichen der aufzuschiebenden Profile jeweils eine Bohrung, welche einen geringeren Durchmesser aufweist, auszubilden. Wenn an den Klemmschenkeln des Klemmstücks komplementäre Ausformungen ausgebildet sind, kann das überstehende Material der Profile in die Durchgangsbohrung der Steckansätze eingepresst werden, wenn das Klemmstück an dem Eckverbinder mit Hilfe der zentralen Schraube befestigt wird.

Eine lösbare oder unlösbare Befestigung der Quer-, Tiefenund Vertikalprofile an den Steckansätzen der Eckverbinder kann auch mit Hilfe eines Klebemittels erreicht werden, wobei es zweckmäßig ist, Rillen, insbesondere Längsrillen an den Steckansätzen auszubilden, in denen das Klebemittel aufgenommen werden kann, wenn die Fixierung mit dem Klemmstück erfolgt.

Die Quer-, Tiefen- und Vertikalprofile können mit Befestigungsöffnungen, welche vorzugsweise rasterartig ausgebildet sind, versehen sein, um eine Befestigung von Einbauten, beispielsweise Einbauschienen, zu ermöglichen. Es kann auch vorteilhaft sein, Profile mit einem zusätzlichen Befestigungssteg und darin ausgebildeten Befestigungsöffnungen einzusetzen, wobei der Befestigungssteg fluchtend zu einer innenseitig angeordneten Seitenfläche verlaufen kann. Zusätzlich kann ein weiterer und insbesondere parallel angeordneter Haltesteg vorgesehen sein, welcher beispielsweise zur Befestigung von Verkleidungsteilen des Geräteschrankes dienen kann.

Die Erfindung wird nachstehend anhand einer Zeichnung weiter erläutert; in dieser zeigen in einer stark schematisierten Darstellung:
- Fig. 1: eine perspektivische rückseitige Ansicht einer Eckverbindung eines erfindungsgemäßen Rahmengestells mit einem Eckverbinder und aufsteckbarem Querprofil, Tiefenprofil und Vertikalprofil;
- Fig. 2: eine perspektivische Innenansicht einer Eckverbindung mit einem Eckverbinder und einem Klemmstück;
- Fig. 3: eine perspektivische Ansicht eines alternativ ausgebildeten Eckverbinders;
- Fig. 4: eine Draufsicht auf einen Eckverbinder mit aufgeschobenem und befestigten Querprofil;
- Fig. 5: einen Eckverbinder mit aufgeschobenem und befestigten Querprofil in einer weiteren Befestigungsvariante und
- Fig. 6: einen Eckverbinder für eine Klebebefestigung der aufgeschobenen Quer-, Tiefen- und Vertikalprofile.

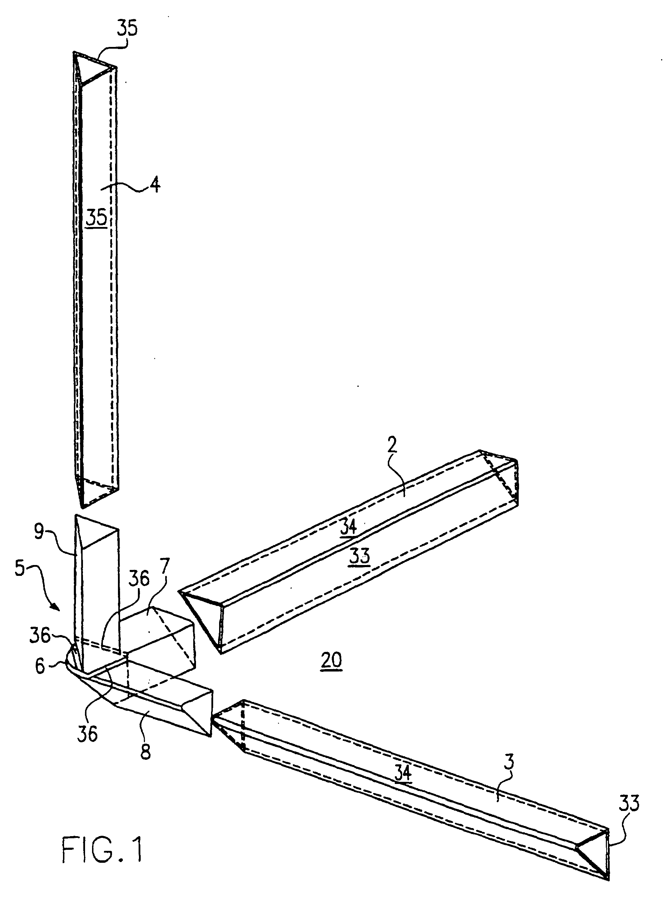

In Figur 1 ist eine Eckverbindung für ein Rahmengestell eines Geräteschrankes in einem auseinandergezogenen, unbefestigten Zustand gezeigt. Die Eckverbindung weist einen Eckverbinder 5 mit drei Steckansätzen 7, 8; 9 an einem Eckteil 6 und auf die Steckansätze 7, 8, 9 aufschiebbare Profile, nämlich ein Querprofil 2, Tiefenprofil 3 und Vertikalprofil 4, auf. Die Profile 2, 3, 4 bilden im aufgeschobenen und befestigten Zustand eine linke rückseitige Gestellecke.

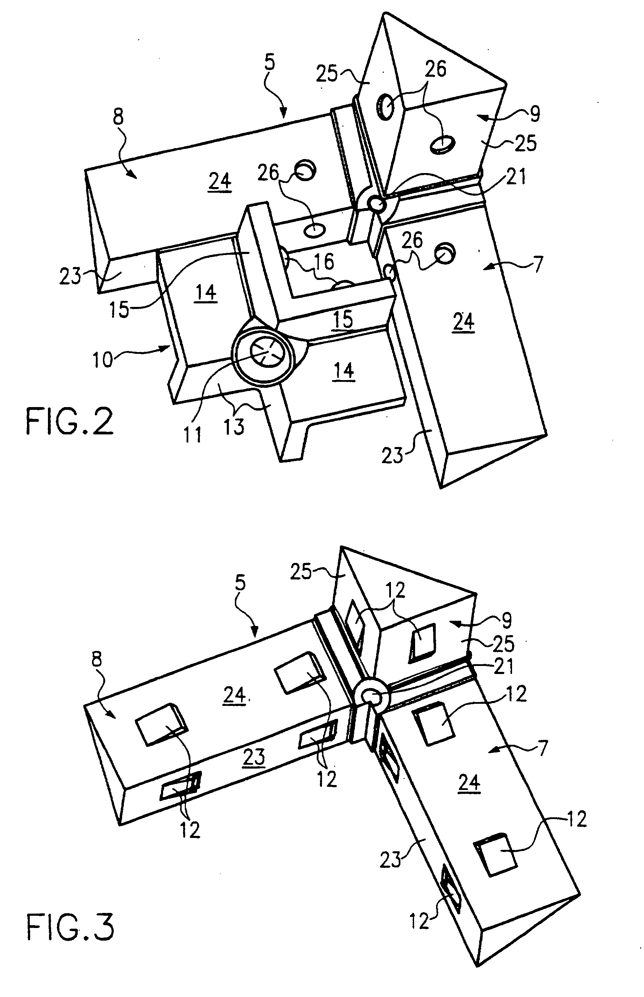

Die Steckansätze 7, 8, 9 des Eckverbinders 5 weisen einen dreieckigen Querschnitt auf, auf welche mit geringem Spiel das aus einem dreieckigen Hohlprofil abgelängte Querprofil 2, Tiefenprofil 3 und Vertikalprofil 4 aufgeschoben oder aufgesteckt werden kann. Nach dem Aufstecken der Profile 2, 3, 4 erfolgt eine Fixierung mit Hilfe eines Klemmstückes 10, welches im Zusammenhang mit Figur 2 beschrieben wird.

Die Hohlprofile 2, 3, 4 und die komplementären Steckansätze 7, 8, 9 des Eckverbinders 5 sind im Querschnitt als ein rechtwinkliges Dreieck ausgebildet, wobei Seitenflächen 33, 34 des Querprofils 2 und des Tiefenprofils 3 sowie Seitenflächen 35 des Vertikalprofils 4 einen rechten Winkel einschließen und zu einem Innenraum 20 gerichtet sind. Das Eckteil 6 des Eckverbinders 5 ist komplementär zu den drei Steckansätzen 7, 8, 9 ausgebildet und weist wenigstens einen Anschlagbereich 36 für jedes Profil 2, 3, 4 auf.

Die in Figur 1 dargestellten Profile 2, 3, 4 können mit Befestigungsöffnungen (nicht dargestellt) versehen sein. Es besteht auch die Möglichkeit, Profile 2, 3, 4 mit einem zusätzlichen Befestigungssteg (nicht dargestellt), welcher beispielsweise senkrecht und fluchtend zu der Seitenfläche 33 des Quer- und Tiefenprofils 2, 3 und zu der Seitenfläche 35 des Vertikalprofils 4 angeordnet sein kann, einzusetzen. Für die Anordnung des Klemmstücks 10 (siehe Fig. 2) weisen die Befestigungsstege dann endseitige Ausnehmungen auf bzw. reichen nur bis an das Klemmstück 10.

In Figur 2 sind ein Eckverbinder 5 und ein Klemmstück 10 in einer auseinandergezogenen perspektivischen Darstellung gezeigt. Das Klemmstück 10 dient zur sicheren Befestigung der auf die Steckansätze 7, 8, 9 aufgesteckten Profile 2, 3, 4. Zur besseren Übersicht wurden die Profile 2, 3, 4 in Figur 2 nicht eingezeichnet.

Das Klemmstück 10 ist komplementär zu den Steckansätzen 7, 8, 9 bzw. den darauf aufgeschobenen Profilen 2, 3, 4 ausgebildet und weist rechtwinklig zueinander angeordnete Klemmschenkel 13, 14, 15 für eine Klemmhalterung der aufgesteckten Profile 2, 3, 4 auf. Die Klemmschenkel 13, 14, 15 sind derart dimensioniert, dass die in einer Klemmhalterung zu befestigenden Profile 2, 3, 4 im Bereich ihrer rechtwinklig zueinander angeordneten Seitenflächen 33, 34, 35 (siehe Fig. 1) bzw. die komplementären Seitenflächen 23, 24, 25 der Steckansätze 7, 8, 9 abgedeckt sind.

Eine reib- und kraftschlüssige Fixierung durch das Klemmstück 10 wird erreicht, wenn die vertikalen Seitenflächen 23 und horizontalen Seitenflächen 24 der Steckansätze 7, 8 sowie die vertikalen Seitenflächen 25 des Steckansatzes 9 mit wenigstens einer Ausnehmung 26, beispielsweise einer Vertiefung, zur Aufnahme von Material der aufgesteckten Profile 2, 3, 4 versehen sind, wobei das Material der Profile 2, 3, 4 beim Befestigen des Klemmstücks 10 durch Ausformungen 16 an den Innenflächen der Klemmschenkel 13, 14, 15, beispielsweise Klemmnoppen, eingedrückt wird.

Die Klemmhalterung mit einem vorteilhaften Reib- und Kraftschluss erfolgt, wenn das Klemmstück 10 mit Hilfe eines Verbindungselementes, beispielsweise einer zentralen Schraube (nicht dargestellt), an dem Eckverbinder 5 befestigt wird. Zu diesem Zweck ist im Schnittpunkt der Klemmschenkel 13, 14, 15 eine Bohrung 11 zur Führung des Verbindungselementes (nicht dargestellt) ausgebildet. Diese Bohrung 11 fluchtet in Befestigungsstellung mit einer Bohrung 21 im Eckverbinder 5 bzw. im Eckteil 6, welche mit einem Gewinde versehen ist.

Figur 3 zeigt eine alternative Ausbildung des Eckverbinders 5. Die Steckansätze 7, 8, 9 weisen an den für das Zusammenwirken mit dem Klemmstück 10 (nicht dargestellt) ausgebildeten Seitenflächen 23, 24, 25 Eingriffselemente 12 auf. Die Eingriffselemente 12 sind als keilähnliche Nasen ausgebildet und wirken mit komplementär ausgebildeten, beispielsweise reckteckigen, Ausnehmungen in den aufsteckbaren Profilen 2, 3, 4 (nicht dargestellt) zusammen. Die keilähnliche Ausbildung der Eingriffselemente 12 ermöglicht ein gleitendes Aufstecken und ein Verrasten der Profile 2, 3, 4 unter Ausbildung eines Klemmbereichs mit Form- und Reibschluss. Nach dem Aufstecken und Einrasten der Profile wird wird eine Klemmhalterung mit einem Klemmstück 10 (siehe Fig. 2) und einem Verbindungselement (nicht dargestellt) und eine besonders stabile Eckverbindung erreicht.

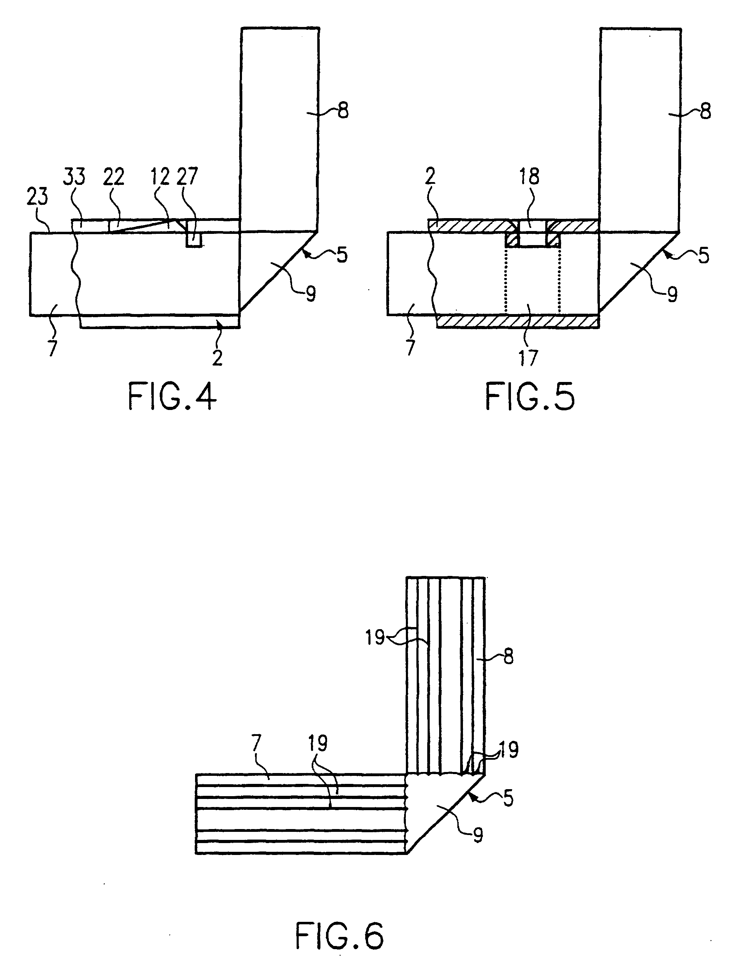

Figur 4 zeigt in einer Draufsicht auf einen Eckverbinder 5 mit Steckansätzen 7, 8, 9 und einem auf den Steckansatz 7 aufgeschobenen Querprofil 2 die einrastende Befestigung gemäß Figur 3. Zur besseren Übersicht sind in Figur 4 nur ein Befestigungselement 12 an der senkrechten Seitenfläche 23 des Steckansatzes 7 und eine Ausnehmung 22 in der anliegenden senkrechten Seitenfläche 33 des Querprofils 2 gezeigt. Angrenzend an das Eingriffselement 12 ist im Steckansatz 7 eine Aufnahmeöffnung 27 für beim Aufstecken des Profils 2 anfallende Späne vorgesehen.

Eine weitere alternative Vorfixierung der Profile 2, 3, 4 ist in Figur 5 anhand eines auf den Steckansatz 7 aufgeschobenen Querprofils 2 gezeigt. In dem Steckansatz 7 ist eine Durchgangsbohrung 17 und in dem aufgesteckten Querprofil 2 eine Bohrung 18 fluchtend zur Durchgangsbohrung 17, jedoch mit einem geringeren Durchmesser, ausgebildet. Wenn ein Klemmstück 10 mit entsprechend ausgebildeten Ausformungen 16 (siehe Fig. 2) fixiert wird, gelangt das überstehende Material des Querprofils 2, wie in Fig. 5 gezeigt, in die Durchgangsbohrung 17 und sichert auf diese Weise eine stabile Befestigung.

In Figur 6 ist ein Eckverbinder 5 mit Rillen 19 in den Steckansätzen 7, 8, 9 dargestellt. Die Rillen 19 dienen zur Aufnahme eines Klebemittels nach Aufschieben der zugehörigen Profile 2, 3, 4 und Befestigung des Klemmstücks 10 (siehe Fig. 2).

Wesentliche Vorteile des erfindungsgemäßen Rahmengestells sind die montagefreundliche und effiziente Befestigung der Quer-, Tiefen- und Vertikalprofile an den Eckverbindern und eine sichere und stabile Befestigung mit jeweils einem Klemmstück pro Eckverbindung.

## Patentansprüche

1. Rahmengestell, insbesondere für Geräteschränke, mit Querprofilen (2), Tiefenprofilen (3) und Vertikalprofilen (4), welche über Eckverbinder (5) verbunden werden, wobei jeder Eckverbinder (5) drei Steckansätze (7, 8, 9) aufweist, auf welche ein Querprofil (2), ein Tiefenprofil (3) und ein Vertikalprofil (4) aufsteckbar und mit Hilfe eines Klemmstücks (10) fixierbar ist, und wobei das Klemmstück (10) zur Klemmhalterung des aufgesteckten Querprofils (2), Tiefenprofils (3) und Vertikalprofils (4) Klemmschenkel (13, 14, 15) aufweist und mit Hilfe eines Verbindungselementes an dem Eckverbinder (5) fixierbar ist,
**dadurch gekennzeichnet,**
**dass** das Klemmstück (10) rechtwinklig zueinander angeordnete Klemmschenkel (13, 14, 15) aufweist, welche durch ihre vertikale und horizontale Anordnung in Befestigungsstellung jeweils zwei aneinandergrenzende Seitenflächen (23, 24, 25) des aufgesteckten Querprofils (2), Tiefenprofils (3) und Vertikalprofils (4) umfassen und in einer Klemmhalterung an dem Eckverbinder (5) halten.

2. Rahmengestell nach Anspruch 1,
**dadurch gekennzeichnet,**
**dass** die rechtwinklig zueinander angeordneten Klemmschenkel (13, 14, 15) des Klemmstücks (10) zur Fixierung des auf die Steckansätze (7, 8) aufgeschobenen Querprofils (2) und Tiefenprofils (3) jeweil einen vertikalen und horizontalen Klemmschenkel (13, 14) sowie zur Fixierung des auf den Steckansatz (9) aufgesteckten Vertikalprofils (4) zwei vertikale, rechtwinklig zueinander angeordnete Klemmschenkel (15) aufweisen.

3. Rahmengestell nach Anspruch 1 oder 2,
**dadurch gekennzeichnet,**
**dass** das Klemmstück (10) zur Führung des Verbindungselements eine Bohrung (11) aufweist, dass die Bohrung (11) im Schnittpunkt der Klemmschenkel (13, 14, 15) ausgebildet ist und mit einer Bohrung (21) im Eckverbinder (5) in Befestigungsstellung fluchtet.

4. Rahmengestell nach einem der vorhergehenden Ansprüche,
**dadurch gekennzeichnet,**
**dass** die Querprofile (2), Tiefenprofile (3) und Vertikalprofile (4) als Hohlprofile und im Querschnitt als ein rechtwinkliges Dreieck ausgebildet sind, dass die Eckverbinder (5) komplementäre dreieckige Steckansätze (7, 8, 9) aufweisen und dass die den rechten Winkel der Steckansätze (7, 8, 9) und der aufsteckbaren Querprofile (2), Tiefenprofile (3) und Vertikalprofile (4) bildenden Seitenflächen (23, 24, 25; 33, 34, 35) zu einem vom Rahmengestell gebildeten Innenraum (20) gerichtet sind.

5. Rahmengestell nach einem der vorhergehenden Ansprüche,
**dadurch gekennzeichnet,**
**dass** die auf die Steckansätze (7, 8, 9) aufgeschobenen und mit Hilfe des Klemmstücks (10) fixierbaren Querprofile (2), Tiefenprofile (3) und Vertikalprofile (4) lösbar oder unlösbar mit den Eckverbindern (5) verbunden sind.

6. Rahmengestell nach einem der vorhergehenden Ansprüche,
**dadurch gekennzeichnet,**
**dass** als Verbindungselement für das Klemmstück (10) und die auf die Steckansätze (7, 8, 9) aufgesteckten Querprofile (2), Tiefenprofile (3) und Vertikalprofile (4) eine Befestigungsschraube eingesetzt ist und die Bohrung (21) in einem Eckteil (6) des Eckverbinders (5) mit einem Gewinde versehen ist.

7. Rahmengestell nach einem der vorhergehenden Ansprüche,
**dadurch gekennzeichnet,**
**dass** das Klemmstück (10) an den Klemmschenkeln (13, 14, 15) Ausformungen (16), beispielsweise Klemmnoppen, aufweist, dass die Steckansätze (7, 8, 9) mit Ausnehmungen (26) versehen sind, welche komplementär zu den Ausformungen (16) des Klemmstücks (10) ausgebidet sind, und dass die auf die Steckansätze (7, 8, 9) aufgesteckten Querprofile (2), Tiefenprofile (3) und Vertikalprofile (4) nach Befestigung des Klemmstücks (10) am Eckverbinder (5) mittels Reib- und Formschluss am Eckverbinder (5) fixiert sind.

8. Rahmengestell nach einem der Ansprüche 1 bis 6,
**dadurch gekennzeichnet,**
**dass** die Steckansätze (7, 8, 9) des Eckverbinders (5) mit Eingriffselementen (12) versehen sind und die Querprofile (2), Tiefenprofile (3) und Vertikalprofile (4) Ausnehmungen (22) zur Aufnahme der Eingriffselemente (12) in Befestigungsstellung aufweisen.

9. Rahmengestell nach einem der Ansprüche 1 bis 6,
**dadurch gekennzeichnet,**
**dass** die Steckansätze (7, 8, 9) des Eckverbinders (5) mit einer Durchgangsbohrung (17), welche insbesondere horizontal angeordnet ist, versehen sind, dass die Querprofile (2), Tiefenprofile (3) und Vertikalprofile (4) mit einer in aufgeschobener Befestigungsstellung fluchtenden Bohrung (18) versehen sind, dass die Bohrung (18) einen geringeren Durchmesser als die Durchgangsbohrung (17) aufweist und das überstehende Material in die Bohrung (17) einpressbar ist.

10. Rahmengestell nach einem der Ansprüche 1 bis 6,
**dadurch gekennzeichnet,**
**dass** die Steckansätze (7, 8, 9) der Eckverbinder (5) Rillen (19) zur Aufnahme eines Klebstoffes aufweisen und dass die Querprofile (2), Tiefenprofile (3) und Vertikalprofile (4) durch Kleben an den Steckansätzen (7, 8, 9) fixierbar sind.

11. Rahmengestell nach einem der vorhergehenden Ansprüche,
**dadurch gekennzeichnet,**
**dass** die Eckverbinder (5) und die Klemmstücke (10) Aluminiumgussteile und die Querprofile (2), Tiefenprofile (3) und Vertikalprofile (4) aus einem Aluminium-Strangpressprofil oder Stahl-Rollierprofil hergestellt sind.

## Claims

1. Basic rack, particularly for equipment cabinets, comprising transverse profiles (2), depth profiles (3) and vertical profiles (4), which are connected by means of corner connectors (5), each corner connector (5) having three fixing extensions (7, 8, 9) on which can be mounted a transverse profile (2), a depth profile (3) and a vertical profile (4) and fixed with the aid of a clamping means (10) and the clamping means (10) having clamping legs (13, 14, 15) for a clamping retention of the mounted transverse profile (2), depth profile (3) and vertical profile (4) and being fixable to the corner connector (5) with the aid of one connecting element,
**characterized in that**
the clamping means (10) has clamping legs (13, 14, 15) being arranged at right angles to one another, which due to their vertical and horizontal arrangement in a fastening position embrace in each case two adjacent lateral faces (23, 24, 25) of the mounted transverse profile (2), depth profile (3) and vertical profile (4) and retain the same in a clamping retention on the corner connector (5).

2. Basic rack according to claim 1,
**characterized in that**
the clamping legs (13, 14, 15) of the clamping means (10) are arranged at right angles to one another, in each case a vertical and horizontal clamping leg (14, 15) are provided for fixing the transverse profile (2) and depth profile (3) engaged on the fixing extensions (7, 8), as well as two vertical clamping legs (15) arranged at right angles to one another for fixing the vertical profile (4) mounted on the fixing extensions (9).

3. Basic rack according to claim 1 or 2,
**characterized in that**
for guiding the connecting element the clamping means (10) has one hole (11) which is formed at the intersection of the clamping legs (13, 14, 15) and in the fastening position is aligned with a hole (21) in the corner connector (5).

4. Basic rack according to one of the preceding claims,
**characterized in that**
the transverse profiles (2), depth profiles (3) and vertical profiles (4) are constructed as hollow profiles and in cross-section as a right-angled triangle, that the corner connectors (5) have complementary, triangular fixing extensions (7, 8, 9) and that the lateral faces (23, 24, 25; 33, 34, 35) forming the right angle of the fixing extensions (7, 8, 9) and the mountable transverse profiles (2), depth profiles (3) and vertical profiles (4) are directed towards an inner area (20) of the basic rack.

5. Basic rack according to one of the preceding claims,
**characterized in that**
the transverse profiles (2), depth profiles (3) and vertical profiles (4) engaged on the fixing extensions (7, 8, 9) and fixed with the aid of the clamping means (10) are connected detachably or undetachably to the corner connectors (5).

6. Basic rack according to one of the preceding claims,
**characterized in that**
a fastening screw is used as connecting element for the clamping means (10) and the transverse profiles (2), depth profiles (3) and vertical profiles (4) mounted on the fixing extensions (7, 8, 9) and the hole (21) in a corner part (6) of the corner connector (5) is provided with a thread.

7. Basic rack according to one of the preceding claims,
**characterized in that**
the clamping means (10) has on the clamping legs (13, 14, 15) protuberances (16), e.g. clamping studs, the fixing extensions (7, 8, 9) are provided with recesses (26), which have a complementary construction to the protuberances (16) of the clamping means (10) and that the transverse profiles (2), depth profiles (3) and vertical profiles (4) mounted on the fixing extensions (7, 8, 9) can be fixed by frictional and positive engagement to the corner connector (5) following the fastening of the clamping means (10) to said corner connector (5).

8. Basic rack according to one of the claims 1 to 6,
**characterized in that**
the fixing extensions (7, 8, 9) of the corner connector (5) are provided with engagement elements (12) and the transverse profiles (2), depth profiles (3) and vertical profiles (4) have recesses (22) for receiving the engagement elements (12) in the fastening position.

9. Basic rack according to one of the claims 1 to 6,
**characterized in that**
the fixing extensions (7, 8, 9) of the corner connector (5 are provided with a through hole (17), which is in particular positioned horizontally, that the transverse profiles (2), depth profiles (3) and vertical profiles (4) are provided with a hole (18) aligned in the engaged fastening position and that the hole (18) has a smaller diameter than the through hole (17) and the projecting material can be pressed into the through hole (17).

10. Basic rack according to one of the claims 1 to 6,
**characterized in that**
the fixing extensions (7, 8, 9) of the corner connectors (5) have grooves (19) for receiving an adhesive and that the transverse profiles (2), depth profiles (3) and vertical profiles (4) can be fixed by adhesion to the fixing extensions (7, 8, 9).

11. Basic rack according to one of the preceding claims,
**characterized in that**
the corner connectors (5) and clamping means (10) are aluminium castings and that the transverse profiles (2), depth profiles (3) and vertical profiles (4) are manufactured from an extruded aluminium section or a rolled steel section.

## Revendications

1. Bâti, notamment pour des baies, comportant des profils transversaux (2), de profondeur (3) et verticaux (4) reliés par des connecteurs d'angle (5), chaque connecteur d'angle (5) présentant trois fiches (7, 8, 9) sur lesquelles un profil transversal (2), un profil de profondeur (3) et un profil vertical (4) peuvent être enfichés et fixés à l'aide d'une pièce de serrage (10), laquelle présente des branches de serrage (13, 14, 15) permettant de maintenir les profils transversaux (2), de profondeur (3) et verticaux (4) enfichés et peut être fixée sur le connecteur d'angle (5) à l'aide d'un élément de jonction,
**caractérisé en ce que**
la pièce de serrage (10) présente des branches de serrage (13, 14, 15) placées à angle droit les unes par rapport aux autres, qui en position d'assemblage entourent chacune deux flancs (23, 24, 25) contigus des profils enfichés transversaux (2), de profondeur (3) et verticaux (4) grâce à leur disposition verticale et horizontale, et qui les maintiennent sur le connecteur d'angle (5) en pincement.

2. Bâti selon la revendication 1,
**caractérisé en ce que**
les branches de serrage (13, 14, 15) de la pièce de serrage (10) placées à angle droit les unes par rapport aux autres présentent deux branches de serrage (13, 14), une horizontale et une verticale, pour fixer les profils transversaux (2) et de profondeur (3) placés sur les fiches (7, 8), ainsi que deux branches de serrage (15) verticales placées à angle droit l'une par rapport à l'autre pour fixer le profil vertical (4) enfiché sur la fiche (9).

3. Bâti selon la revendication 1 ou 2,
**caractérisé en ce que**
la pièce de serrage (10) présente un alésage (11) pour guider l'élément de jonction, l'alésage (11) est formé à l'intersection des branches de serrage (13, 14, 15) et s'aligne avec un alésage (21) dans le connecteur d'angle (5) en position d'assemblage.

4. Bâti selon l'une des revendications précédentes,
**caractérisé en ce que**
les profils transversaux (2), les profils de profondeur (3) et les profils verticaux (4) apparaissent sous forme de profils creux et de triangle rectangle dans une coupe transversale, les connecteurs d'angle (5) présentent des fiches triangulaires complémentaires (7, 8, 9), et les flancs (23, 24, 25 ; 33, 34, 35) formant les angles droits des fiches (7, 8, 9) et les profils enfichables transversaux (2), de profondeur (3) et verticaux (4) sont orientés vers un espace intérieur (20) formé par le bâti.

5. Bâti selon l'une des revendications précédentes,
**caractérisé en ce que**
les profils transversaux (2), de profondeur (3) et verticaux (4) placés sur les fiches (7, 8, 9) et pouvant être fixés à l'aide de la pièce de serrage (10) sont reliés aux connecteurs d'angle (5) de façon amovible ou non.

6. Bâti selon l'une des revendications précédentes,
**caractérisé en ce que**
une vis de fixation est utilisée comme élément de jonction pour la pièce de serrage (10) et les profils transversaux (2), de profondeur (3) et verticaux (4) placés sur les fiches (7, 8, 9), et l'alésage (21) est pourvu d'un filetage dans une pièce angulaire (6) du connecteur d'angle (5).

7. Bâti selon l'une des revendications précédentes,
**caractérisé en ce que**
la pièce de serrage (10) sur les branches de serrage (13, 14, 15) présente des démoulages (16), par exemple des nopes de serrage, les fiches (7, 8, 9) sont pourvues d'évidements (26) formés en complémentarité aux démoulages (16) de la pièce de serrage (10) et **en ce que** les profils transversaux (2), de profondeur (3) et verticaux (4) placés sur les fiches (7, 8, 9) sont fixés au connecteur d'angle (5) à l'aide d'une fermeture du moule ou de pression après que la pièce de serrage (10) ait été fixée sur le connecteur d'angle (5).

8. Bâti selon l'une des revendications 1 à 6,
**caractérisé en ce que**
les fiches (7, 8, 9) du connecteur d'angle (5) sont pourvues d'éléments d'engrènement et les profils transversaux (2), de profondeur (3) et verticaux (4) présentent des évidements (22) pour accueillir ces éléments d'engrènement (12) en position d'assemblage.

9. Bâti selon l'une des revendications 1 à 6,
**caractérisé en ce que**
les fiches (7, 8, 9) du connecteur d'angle (5) sont pourvues d'un alésage débouchant (17) disposé notamment à l'horizontal, et les profils transversaux (2), de profondeur (3) et verticaux (4) sont pourvus d'un alésage affleurant (18) en position enfichée de fixage des évidements, l'alésage (18) présente un diamètre plus petit que celui de l'alésage débouchant (17) et le matériau supérieur peut être enfoncé dans l'alésage (17).

10. Bâti selon l'une des revendications 1 à 6,
**caractérisé en ce que**
les fiches (7, 8, 9) du connecteur d'angle (5) sont pourvues de rainures (19) pour accueillir une colle, et les profils transversaux (2), de profondeur (3) et verticaux (4) peuvent être fixés par collage sur les fiches (7, 8, 9).

11. Bâti selon l'une des revendications précédentes,
**caractérisé en ce que**
les connecteurs d'angle (5) et les pièces de serrage (10) sont des pièces en aluminium fonte, et les profils transversaux (2), de profondeur (3) et verticaux (4) sont construits à partir d'un profil filé à la presse en aluminium ou d'un profil en acier à pivoter.
